# FASCICULE DE BREVET EUROPEEN

(11) **EP 2 167 349 B1**
(45) Date de publication et mention de la délivrance du brevet: **04.05.2011**
(21) Numéro de dépôt: 08826841.2
(22) Date de dépôt: 18.07.2008
(51) Int. Cl.: B60R 13/02, B62D 65/08

(54) **AGENCEMENT DE FIXATION D'UNE GARNITURE D'UNE SURFACE DE CARROSSERIE AUTOMOBILE AU VOISINAGE D'UN VITRAGE**
ANORDNUNG ZUR BEFESTIGUNG EINER MOTORFAHRZEUGKAROSSERIE-OBERFLÄCHENAUSKLEIDUNG IN DER NÄHE EINER FENSTERSCHEIBE
ARRANGEMENT FOR FASTENING A MOTOR VEHICLE BODY SURFACE LINER IN THE VICINITY OF A WINDOW GLASS

(30) Priorité: 19.07.2007 FR 0705228
(43) Date de publication de la demande: 31.03.2010
(73) Titulaire: Renault s.a.s., 92100 Boulogne-Billancourt (FR)
(72) Inventeur: COUTURIER, Karl, F-78760 Jouars-pontchartrain (FR); GUERLIN, Philippe, F-91540 Mennecy (FR)
(74) Mandataire: Fantin, Teddy
(86) Numéro de dépôt international: PCT/FR2008/051360
(87) Numéro de publication internationale: WO 2009/016305

(56) Documents cités:
- EP-A- 1 145 937
- DE-A1- 2 845 708
- DE-A1- 3 936 372
- FR-A- 2 529 844
- FR-A- 2 863 567
- GB-A- 2 314 049
- JP-A- 8 175 283
- JP-A- 9 328 047
- US-A- 3 451 716
- US-A- 5 593 182

## Description

La présente invention concerne un agencement de fixation d'une garniture d'une surface de carrosserie automobile au voisinage d'une traverse formant une feuillure de collage de vitrage. Elle concerne en particulier un agencement de fixation de la garniture avant d'un pavillon au voisinage de la traverse avant de pavillon qui comporte une feuillure de collage de pare-brise.

On connaît, par exemple par le document US 6 367 872, un agencement tel que représenté en figure 3, dans lequel la traverse avant de pavillon 1 forme un caisson comportant une feuillure avant 2, constituée de deux épaisseurs de métal, destinée à recevoir le haut du pare-brise 3, par l'intermédiaire d'une couche de mastic de collage et d'amortissement 9. La traverse 1 comporte une paroi inférieure 4 qui permet de monter par des moyens non représentés une garniture de pavillon 5 constituée d'un insert 6 donnant la forme de la garniture et d'un revêtement textile 7. La bordure avant 8 de la garniture 5 vient se redresser sous le pare-brise 3 pour cacher la traverse avant. La bordure s'arrête à une certaine distance du pare-brise afin de laisser un jeu B suffisant pour éviter les contacts entre la tranche 8 de garniture 5 et le pare-brise 3. Ces contacts engendrent des bruits, et ce phénomène est d'autant plus présent que le haut du pare-brise 3 est souvent recouvert sur sa face intérieure d'une couche d'émail 10 destinée à dissimuler la tranche 8 de garniture 5 à la vue de l'extérieur. À cet effet, il est prévu une distance A d'environ 5 mm entre la bas de la couche d'émail 10 et le droit de la tranche 8 sur le pare-brise. Le contact de la tranche 8 et de la surface émaillée 10 provoquerait des crissements qu'il convient d'éviter. Afin d'éviter ces risques de bruits, on prévoit que le jeu B doit être suffisamment grand, généralement de l'ordre de 5 mm, pour que, même en tenant compte des dispersions dimensionnelles de la garniture de pavillon et de son positionnement en référence par rapport à la traverse de pavillon, il n'y ait jamais contact entre la tranche de garniture de pavillon et la surface intérieure du pare-brise.

On a cherché à remédier aux problèmes de nuisance sonore dus à de tels contacts lorsque le jeu est inférieur à 5 mm en supprimant la couche d'émaillage de la face externe intérieure du pare-brise en la transférant vers une couche interne du feuilletage constituant le pare-brise, ou bien en rembordant l'habillage textile de la garniture de pavillon sur la tranche avant.

DE 2 845 708 et JP 08 175 283 montrent un véhicule présentant les caractéristiques du préambule de la revendication 1 annexée.

Le but de la présente invention est de pouvoir minimiser le jeu existant entre la face interne du pare-brise et la tranche avant de la garniture sans nécessairement modifier l'emplacement de l'émaillage ou sans nécessiter de rembordement de la garniture.

L'invention atteint son but grâce à un vehicule automobile conforme à la revendication 1 annexée.

Avantageusement, la garniture comporte des surfaces de positionnement comportant un relief de butée pour l'extrémité de la feuillure.

Dans une forme de réalisation, ce relief de butée est formé par l'extrémité d'une nervure formée dans la garniture, de manière à raidir celle-ci et à permettre de l'appuyer avec contrainte contre la feuillure.

D'autres caractéristiques et avantages de l'invention ressortiront de la description suivante d'un exemple de réalisation. Il sera fait référence aux dessins annexés sur lesquels :
- la figure 1 représente une vue en coupe verticale de la partie avant de la garniture de pavillon et du pare-brise par rapport à la traverse de pavillon, conformément à la présente invention.
- la figure 2 représente une vue en perspective vue de dessus et de trois-quarts de la partie avant de la garniture de pavillon conforme à l'invention, avec la représentation de deux sections verticales particulières et de la traverse de pavillon au niveau de ces deux sections.
- la figure 3 représente une réalisation de l'art antérieur, dans une représentation analogue à celle de la revendication 1.

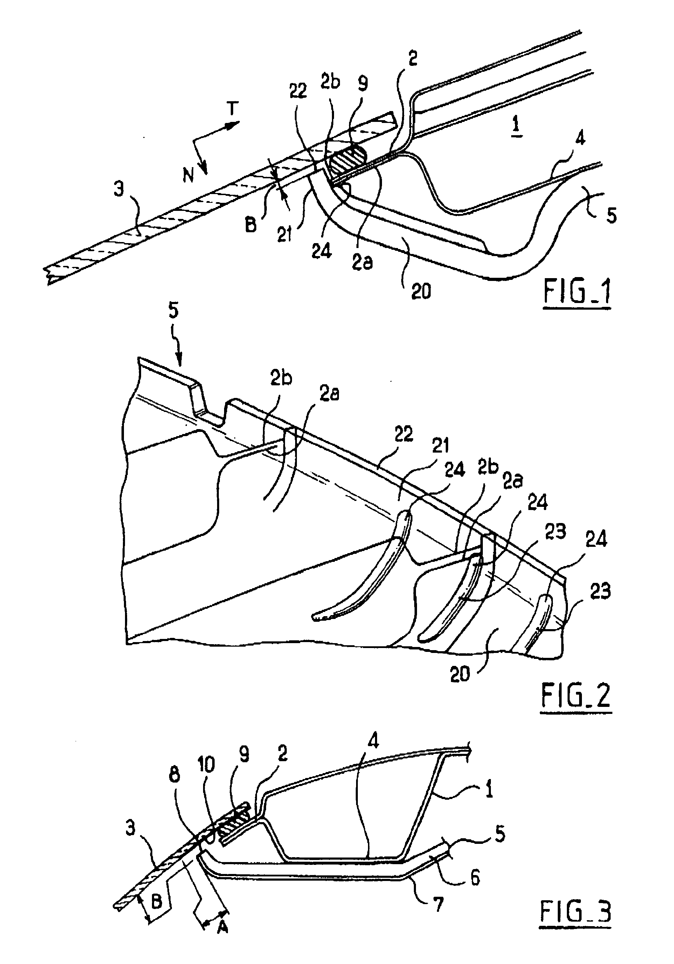

La figure 1 montre en partie la traverse avant de pavillon 1 avec à l'avant sa feuillure 2 de collage de pare-brise formée par la réunion des bordures 2a du demi-caisson inférieur et 2b du demi-caisson supérieur. Le pare-brise 3 est collé par le joint de mastic 9 sur la feuillure 2, au niveau de son bord supérieur, de sorte que le bord supérieur de pare-brise est sensiblement parallèle à la feuillure 2 à ce niveau. Sur la face inférieure 4 de la traverse 1 vient s'appliquer une surface de la garniture 5 de pavillon, laquelle est fixée par des moyens non représentés à la traverse 1 ou à une structure solidaire de la traverse 1. On n'a pas représenté non plus les moyens classique de mise en référence de la garniture 5 par rapport à la traverse 1 et qui peuvent être les crochets du pare-soleil ou bien une cale injectée.

La garniture 5 de pavillon forme à l'avant une sorte de gouttière qui remonte vers le pare-brise par une face avant inclinée 20 se terminant par une région de bordure encore plus inclinée, formant une surface 21 qui arrive sensiblement normalement au pare-brise 3. La garniture 5 présente devant celui-ci une tranche 22 espacée d'une cote B par rapport à la surface inférieure du pare-brise 3.

Selon l'invention, la garniture 5 de pavillon est en appui sous contrainte (exercée par les moyens de montage de la garniture) contre l'extrémité de la feuillure 2 (en l'occurrence l'extrémité de sa seule feuille supérieure 2b) par l'intermédiaire de la surface intérieure 21 de la bordure formant l'extrémité de la garniture 5. Grâce à cet appui, le positionnement du bord avant 22 de la garniture 5 par rapport à la direction T tangente au pare-brise 3 est très précis.

Par ailleurs, des nervures verticales 23 moulées dans la partie en gouttière de la garniture 5 forment à leur partie supérieure, à une courte distance de la tranche 22, une surface de positionnement formant butée 24 adjacente à la surface 21 et qui vient s'appuyer sur le bord du dos de la feuillure 2 quand la garniture 5 est mise en place en appui contre ladite feuillure 2. De cette manière, le jeu B dans la direction N normale au pare-brise est réglé de manière très précise en référence directe à la feuillure 2.

Grâce à ces dispositions, on peut donc réduire le jeu B à une valeur très précise inférieure aux valeurs usuelles de l'art antérieur et atteindre, par exemple, un jeu de 2 mm.

Les nervures 23 ne servent pas seulement à former un appui 24, mais elles servent aussi à rigidifier la partie en forme de gouttière à l'avant de la garniture 5, ce qui permet de rendre cette partie plus rigide et flexible et permet donc la mise en contrainte de la bordure avant de la garniture 5 de pavillon contre la feuillure 2 de collage du pare-brise. Le nombre et la forme des rainures 23 dépendent directement des matériaux composant la garniture.

Les surfaces de positionnement de la garniture ne sont pas forcément liées aux nervures, celles-ci pouvant n'être prévues que pour la rigidification tandis que le positionnement est obtenu par une autre surface de la garniture au voisinage de la tranche 22.

## Revendications

1. Véhicule automobile comportant un pavillon, un pare-brise (3), une traverse avant (1) de pavillon formant une feuillure avant (2) de collage du pare-brise (3), supportant le bord supérieur d'un pare-brise (3), une garniture avant (5) de pavillon étant fixée sous la traverse avant (1) de pavillon à une structure solidaire de la traverse avant (1) de pavillon, et comportant à l'avant une région se terminant par une tranche avant (22) se relevant vers le pare-brise (3) pour définir avec celui-ci un jeu (B) entre la surface intérieure du pare-brise (3) et la tranche avant (22) de la garniture (5) de pavillon, **caractérisé en ce que** la garniture (5) de pavillon comporte au voisinage de la tranche avant (22) des surfaces de positionnement (21, 24) venant en appui contre l'extrémité de la feuillure avant (2) et contre le dos de la feuillure avant de la traverse avant (1) moyennant quoi le jeu (B) avec le pare-brise (3) peut être minimisé et déterminé de manière précise en évitant les contacts avec le pare-brise (3).

2. Véhicule selon la revendication 1, **caractérisé en ce que** lesdites surfaces de positionnement (21, 24) comportent un relief de butée (24) pour l'extrémité de la feuillure (2).

3. Véhicule selon la revendication 2, **caractérisé en ce que** ce relief de butée (24) est formé par l'extrémité d'une nervure (23) formée dans la garniture (5).

4. Véhicule selon l'une quelconque des revendications 1 à 3, **caractérisé en ce que** a garniture (5) de pavillon forme à l'avant une gouttière qui remonte vers le pare-brise par une face avant inclinée (20) se terminant par une région de bordure encore plus inclinée, se terminant par ladite tranche (22).

## Claims

1. Motor vehicle, comprising a roof, a windshield (3), a front roof crossmember (1) forming a front rebate (2) for adhesively bonding the windshield (3), supporting the upper edge of a windshield (3), a front headliner (5) being fastened under the front roof crossmember (1) to a structure fixed to the front roof crossmember (1), and comprising at the front a region terminating in a front edge (22) rising toward the windshield (3) so as to define therewith a clearance (B) between the inner surface of the windshield (3) and the front edge (22) of the headliner (5), **characterized in that** the headliner (5) comprises, in the vicinity of the front edge (22), positioning surfaces (21, 24) which bear against the end of the front rebate (2) and against the back of the front rebate of the front crossmember (1), whereby the clearance (B) with the windshield (3) may be minimized and precisely determined while avoiding contacts with the windshield (3) .

2. Vehicle according to Claim 1, **characterized in that** said positioning surfaces (21, 24) comprise a stop projection (24) for the end of the rebate (2).

3. Vehicle according to Claim 2, **characterized in that** said stop projection (24) is formed by the end of a rib (23) formed in the liner (5).

4. Vehicle according to any one of Claims 1 to 3, **characterized in that** the headliner (5) forms at the front a gutter which rises toward the windshield via a front inclined face (20) terminated by an edging region which is even more inclined, terminated by said edge (22).

## Patentansprüche

1. Kraftfahrzeug, mit einem Dach, einer Windschutzscheibe (3) und einer vorderen Dachquerstrebe (1), die einen vorderen Anschlag (2) zum Ankleben der Windschutzscheibe (3) bildet und die Oberkante der Windschutzscheibe (3) trägt, wobei unter der vorderen Dachquerstrebe (1) eine vordere Dichtung (5) mit einer mit der vorderen Dachquerstrebe (1) fest verbundenen Struktur befestigt ist und davor einen Bereich aufweist, der durch in einer vorderen Schnittfläche (22), die sich zu der Windschutzscheibe (3) erhebt, um mit dieser ein Spiel (B) zwischen der inneren Oberfläche der Windschutzscheibe (3) und der vorderen Schnittfläche (22) der Dachdichtung (5) zu definieren, **dadurch gekennzeichnet, dass** die Dachdichtung (5) in der Umgebung der vorderen Schnittfläche (22) Positionierungsoberflächen (21, 24) aufweist, die sich an dem Ende des vorderen Anschlags (2) und an der Rückseite des vorderen Anschlags der vorderen Querstrebe (1) abstützen, wodurch das Spiel (B) mit der Windschutzscheibe (3) minimiert und präzise bestimmt werden kann, indem Kontakte mit der Windschutzscheibe (3) vermieden werden.

2. Fahrzeug nach Anspruch 1, **dadurch gekennzeichnet, dass** die Positionierungsoberflächen (21, 24) ein Anschlagrelief (24) für das Ende des Anschlags (2) aufweisen.

3. Fahrzeug nach Anspruch 2, **dadurch gekennzeichnet, dass** dieses Anschlagrelief (24) durch das Ende einer in der Dichtung (5) gebildeten Rippe (23) gebildet ist.

4. Fahrzeug nach einem der Ansprüche 1 bis 3, **dadurch gekennzeichnet, dass** die Dachdichtung (5) davor eine Rinne bildet, die zu der Windschutzscheibe durch eine geneigte vordere Fläche (20) aufsteigt, die in einem noch stärker geneigten Einfassungsbereich endet, der in der Schnittfläche (22) endet.
